# EUROPÄISCHE PATENTSCHRIFT

(11) **EP 0 403 424 B1**
(45) Veröffentlichungstag und Bekanntmachung des Hinweises auf die Patenterteilung: **29.06.1994**
(21) Anmeldenummer: 90810359.1
(22) Anmeldetag: 16.05.1990
(51) Int. Cl.: G21C 9/004, B01J 19/32

(54) **Vorrichtung zum Entfernen von Aerosolen aus der Luft eines Kernreaktor-Containments**
Device for removing of aerosols out of the air in a nuclear reactor containment
Dispositif pour l'enlèvement des aérosols dans l'atmosphère de confinement d'un réacteur nucléaire

(30) Priorität: 14.06.1989 CH 2218/89
(43) Veröffentlichungstag der Anmeldung: 19.12.1990
(73) Patentinhaber: SULZER THERMTEC AG, CH-8404 Winterthur (CH)
(72) Erfinder: Larsen, Niels, CH-8472 Seuzach (CH); Mathys, Peter, CH-8212 Neuhausen (CH)
(74) Vertreter: Hammer, Bruno, Dr.

(56) Entgegenhaltungen:
- EP-A- 0 221 200
- EP-A- 0 285 849
- DE-A- 3 644 179

## Beschreibung

Die Erfindung bezieht sich auf eine Vorrichtung zum Entfernen von Aerosolen, die die Merkmale des Oberbegriffs des Anspruchs 1 aufweist.

In einer bekannten Vorrichtung dieser Art (EP-A-0 285 845) sind die im Wasserbad angeordneten Düsen als Venturi-Wäscher ausgebildet, denen die mit Aerosolen beladene Luft zugeführt wird, wobei in jeder Düse an ihrer engsten Stelle der durchströmenden Luft Wasser zugemischt wird. Durch das Vermischen von Wasser und Luft wird ein grosser Teil der Aerosole im Wasser gebunden. Oberhalb des Wasserbades ist in dem das Wasserbad enthaltenen Behälter ein Filter aus Edelstahlfasern angeordnet, das die aus dem Wasserbad austretende Luft passieren muss, bevor sie über ein Abluftkamin in die Atmosphäre austreten darf. In dem Edelstahlfilter sollen also die restlichen Aerosole zurückgehalten werden.

Bei der bekannten Vorrichtung ist es notwendig, dass für das Unterbringen des Wasserbades und des Filters ein besonderer Behälter vorhanden ist. Die feinsten Edelstahlfasern des Filters haben eine Dicke von 2 Mikrometer und bedürfen besonderer Konservierungsmassnahmen gegen Korrosion. Nach etwaigen Probeläufen der Vorrichtung muss normalerweise jedesmal der Filter ausgewechselt werden. Ueberdies ist das Rückhaltevermögen des Filters beschränkt. Die mit vertikaler Achse im Wasserbad angeordneten Venturi-Wäscher beanspruchen eine relativ grosse Bauhöhe. Der Konstruktionsaufwand und das Bauvolumen der bekannten Vorrichtung sind also recht beträchtlich.

Der Erfindung liegt die Aufgabe zugrunde, eine Vorrichtung der eingangs genannten Art dahingehend zu verbessern, dass bei mindestens gleichbleibendem Reinheitsgrad der die Vorrichtung verlassenden Luft der Konstruktionsaufwand für die Vorrichtung wesentlich verringert wird und kein zusätzlicher Platzbedarf für das Wasserbad notwendig ist.

Diese Aufgabe wird erfindungsgemäss durch die Merkmale des Kennzeichens des Anspruches 1 gelöst.

Die Verwendung von mehreren, aus einfachen Rohren gebildeten Düsen mit je einer gelochten Prallplatte verringert die Bauhöhe gegenüber den bekannten Venturi-Wäschern wesentlich, so dass der Platzbedarf hierfür kleiner ist. Die Verwendung von statischen Mischelementen erlaubt es, praktisch sämtliche Aerosole zu binden, so dass die aus dem Wasserbad austretende Luft unmittelbar in die Umgebung abgegeben werden kann, d.h. ohne dass sie noch Filter passieren muss. Für die erfindungsgemässe Vorrichtung ist es nicht notwendig, einen besonderen geschlossenen Behälter vorzusehen, denn die Düsen mit den Prallplatten und die statischen Mischelemente sind in einem ohnehin in der Kernreaktoranlage vorhandenen Wasserbecken untergebracht. Probeläufe können mit der neuen Vorrichtung jederzeit vorgenommen werden, ohne dass danach Teile ersetzt werden müssten. Die Teile der Vorrichtung sind gut inspizierbar, und die statischen Mischelemente können leicht ausgebaut und gegebenenfalls mit herkömmlichen Verfahren gereinigt werden.

Ein Ausführungsbeispiel der Erfindung ist in der folgenden Beschreibung anhand der Zeichnung näher erläutert. Es zeigen:
- Fig. 1: schematisch einen Vertikalschnitt durch ein Wasserbecken mit der erfindungsgemässen Vorrichtung,
- Fig. 2: einen Horizontalschnitt durch einen Teil des Wasserbeckens nach Fig. 1, etwa auf der Höhe des Wasserspiegels,
- Fig. 3: teilweise im Schnitt und teilweise in Ansicht eine Düse mit Prallplatte der erfindungsgemässen Vorrichtung,
- Fig. 4: eine Draufsicht auf die Prallplatte und
- Fig. 5: eine perspektivische Ansicht eines Mischelementes.

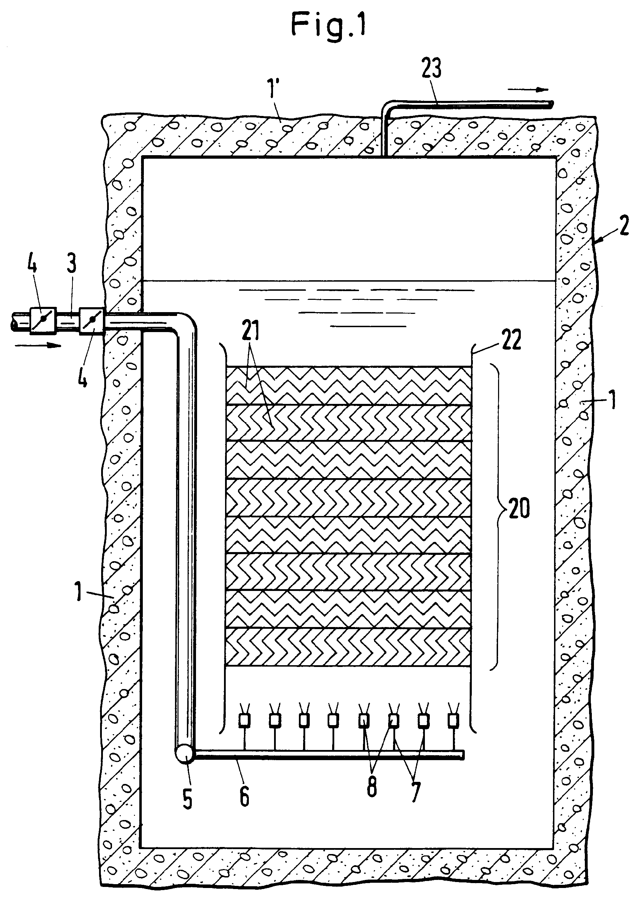

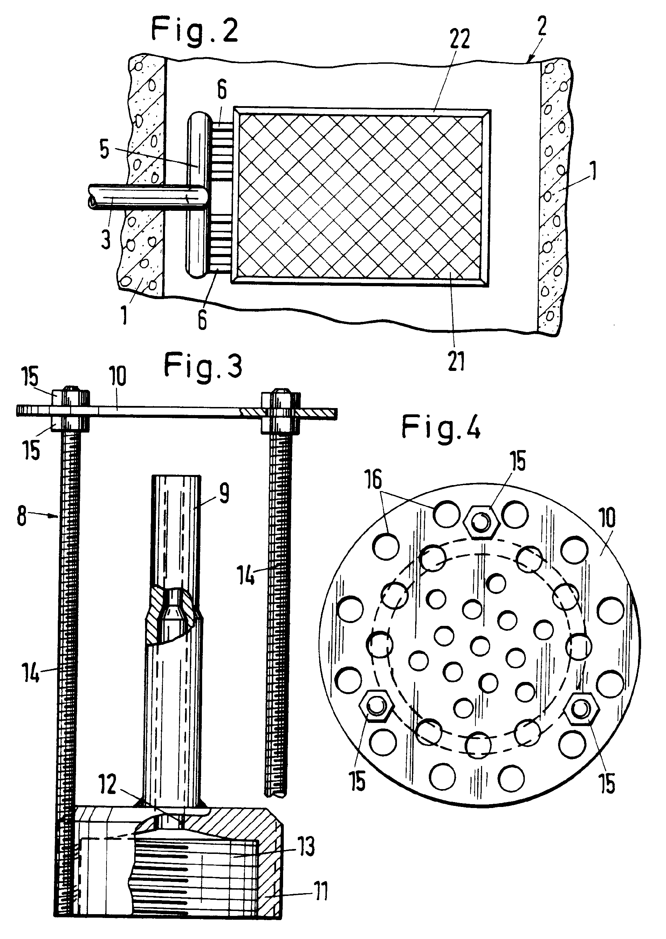

Gemäss Fig. 1 sind mit 1 die Betonwände eines Beckens 2 bezeichnet, das zum grössten Teil mit Wasser gefüllt ist und das beispielsweise zugleich als Lagerbecken für Brennelementstäbe einer nicht näher dargestellten Kernreaktoranlage dient. Die in Fig. 1 linke Wand des Beckens 2 wird von einer Leitung 3 durchdrungen, die mit ihrem in Fig. 1 nicht gezeigten Ende an das Innere eines Containments oder Sicherheitsbehälters angeschlossen ist. Zwischen dem Containment und dem Becken 2 enthält die Leitung 3 zwei Containment-Isolationsventile 4, die im Falle eines Ueberdrucks im Containment öffnen. Die Leitung 3 ist innerhalb des Beckens 2 abwärtsgeführt und mündet in einen im wesentlichen horizontalen Verteiler 5, von dem acht (Fig. 2) Rohre 6 abzweigen, die sich etwa horizontal in das Beckeninnere erstrecken und an ihrem in Fig. 1 rechtem Ende verschlossen sind. Von jedem Rohr 6 zweigen acht vertikale Rohre 7 ab, die zu je einer aus Düse und Prallplatte bestehenden Baueinheit 8 führen, die weiter unten im Zusammenhang mit Fig. 3 und 4 näher erläutert wird. Insgesamt ergeben sich also 64 Baueinheiten 8, die sich über ein rechteckiges Feld verteilen und die alle auf gleicher Höhe in einer horizontalen Ebene angeordnet sind.

Oberhalb der insgesamt 64 Baueinheiten 8 ist im Becken 2 ein Paket 20 von statischen Mischelementen 21 vorgesehen, die vollkommen in der Wasserfüllung des Beckens 2 untergetaucht sind. Das im Horizontalschnitt rechteckige Paket 20 (Fig. 2) ist von einem Mantel 22 umgeben, der mit seinem unteren Ende bis in den Bereich der Bauelemente 8 reicht. An der Decke 1′ des Beckens 2 ist eine Leitung 23 angeschlossen, die zu einem nicht gezeigten Abluftkamin führt.

Gemäss Fig. 3 besteht jede Baueinheit 8 aus einer Düse 9 und einer gelochten Prallplatte 10. Die Düse 9 ist ein vertikal angeordnetes Rohr, dessen Querschnitt etwa in der Mitte der Rohrlänge konisch etwas verengt ist. Mit seinem unteren Ende ist das Düsenrohr auf einer Ueberwurfmutter 11 durch Schweissen befestigt. Die Ueberwurfmutter 11 weist ein zur Düse 9 fluchtendes Loch 12 auf und ist mit einem Innengewinde 13 versehen, mit dem sie auf ein ein entsprechendes Aussengewinde aufweisendes Rohr 7 aufgeschraubt wird. An jeder Ueberwurfmutter 11 ist mit Hilfe von drei gleichmässig über den Umfang verteilten Stangen 14 die Prallplatte 10 befestigt. Zu diesem Zweck sind am äusseren Umfang der Ueberwurfmutter drei axiale Aussparungen eingearbeitet, in die die unteren Enden der Stangen 14 zu liegen kommen, die mit der Ueberwurfmutter verschweisst sind. Die Prallplatte 10 wird auf den Stangen 14 jeweils zwischen zwei Muttern 15 in einem bestimmten Abstand von der Mündung der Düse 9 gehalten. Die Verteilung der Löcher 16 über die Prallplatte 10 ist beispielsweise aus Fig. 4 ersichtlich.

Die statischen Mischelemente 21 können in bekannter Weise aus gewellten oder geriffelten Schichtkörpern, z.B. Blechen, bestehen. Sie sind so aufgebaut, dass sich zwischen ihnen offene, sich kreuzende Strömungskanäle ergeben. Der detaillierte Aufbau solcher Mischelemente ist z.B. in der CH-PS 547 120 beschrieben.

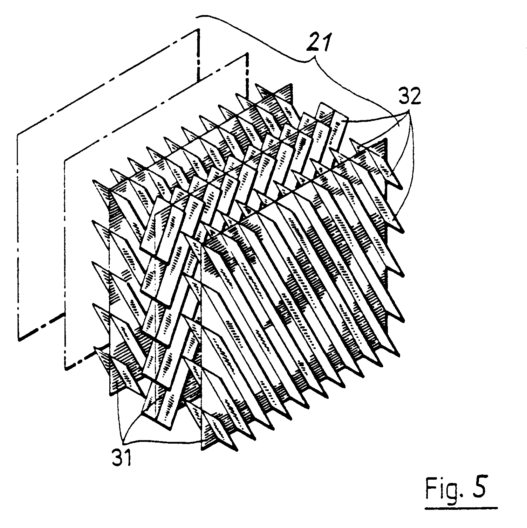

Ein Beispiel für den Aufbau eines solchen Mischelementes 21 ist in Fig. 5 gezeigt. Das statische Mischelement besteht aus mehreren vertikalen Blechen 31 mit zueinander parallelen, zur Vertikalen geneigten Leitelementen 32, die rechtwinklig auf den Blechen 31 aufgeschweisst sind. Die Bleche 31 sind nebeneinander abwechselnd so angeordnet, dass die Leitelemente 32 sich kreuzen. Dadurch wird die von den Düsen 9 aufsteigende Luft im Mischelement 21 in viele sich unter ca. 90° kreuzende Teilströme aufgeteilt. Die Mischelemente 21 sind im Paket 20 so aufeinander gestapelt, dass die vertikalen Bleche 31 des einen Mischelementes mit denjenigen des benachbarten Mischelementes einen von Null verschiedenen Winkel einschliessen; dieser beträgt bei Fig. 1 z.B. 45°.

Die beschriebene Vorrichtung funktioniert wie folgt. Im Fall, dass im Containment ein Ueberdruck auftritt, z.B. infolge eines Kernschmelzens, öffnen die Isolationsventile 4. Mit Aerosolen beladene Luft aus dem Containment strömt nunmehr über die Leitung 3, die Rohre 6 und 7 sowie die Düsen 9 in das Wasserbad des Beckens 2. Die aus den Düsen 9 austretende Luft reisst Wasser aus der Umgebung mit und mischt sich intensiv beim Durchgang durch die Löcher 16 der Prallplatten 10. Das Wasser-Luftgemisch strömt dann weiter aufwärts und tritt in die statischen Mischelemente 21 ein. In den sich kreuzenden Strömungskanälen der Mischelemente findet ein fortlaufendes Aufspalten, Ausdehnen und Umlagern der Komponenten des Wasser-Luftgemisches statt. Dabei wird die Luft, die die Aerosole mitschleppt, im Wasser dispergiert. Die Aerosole werden aus der Luft an das Wasser oder am Mischer abgeschieden. Am oberen Ende des Paketes 20 tritt also von den Aerosolen befreite Luft aus, die dann über die Leitung 23, ohne weitere Filter passieren zu müssen, in den Abluftkamin gelangt. Das am oberen Ende des Paketes 20 austretende Wasser zirkuliert ausserhalb des Mantels 22 abwärts, wozu zwischen den Wänden 1 und dem Mantel 2 entsprechend Platz gelassen werden muss. Am unteren Ende des Mantels 22 strömt das Wasser wieder in den Bereich der Düsen 9.

Abweichend von der beschriebenen Ausführungsform kann, statt der Zuordnung von jeweils einer Prallplatte 10 zu einer Düse 9, eine für alle Düsen gemeinsame Prallplatte oder jeweils für eine Gruppe von Düsen eine gemeinsame Prallplatte vorgesehen sein.

## Patentansprüche

1. Vorrichtung zum Entfernen von Aerosolen, die in der aus einem Containment einer Kernreaktoranlage im Falle eines Ueberdrucks in diesem Containment entweichenden Luft enthalten sind, wobei die Luft über eine am Containment angeschlossene Leitung (3) einer Mehrzahl von in einem Wasserbad (2) angeordneten Düsen (9) zugeleitet wird, dadurch gekennzeichnet, dass das Wasserbad (2) von einem in der Kernreaktoranlage befindlichen Becken gebildet ist, dass die Düsen (9) von mit der Leitung verbundenen, im wesentlichen vertikalen Rohren gebildet sind, dass im Wasserbad oberhalb der Düsen im Abstand vom Düsenaustritt je eine gelochte Prallplatte (10) angeordnet ist, die mit der Düse eine Baueinheit (8) bildet, und dass im Wasserbad oberhalb dieser Prallplatten und im Abstand von diesen ein von einem Mantel (22) umgebenes Paket (20) von statischen Mischelementen (21) angeordnet ist.

2. Vorrichtung nach Anspruch 1, dadurch gekennzeichnet, dass der das Paket (20) von statischen Mischelementen (21) umgebende Mantel (22) an seinem unteren Ende bis in den Bereich der Düsen reicht.

## Claims

1. Apparatus for removing aerosols contained in the air escaping from a nuclear reactor plant containment in the event of an excess pressure therein, the air being fed to a number of nozzles (9) in a water bath (2) via a line (3) connected to the containment, characterised in that the water bath (2) is formed by a pool in the nuclear reactor plant, in that the nozzles (9) are formed by substantially vertical tubes connected to the line, in that a perforate baffle plate (10) is provided in the water bath above each nozzle at a distance from the nozzle outlet and together with the nozzle forms an assembly unit (8), and in that a set (20) of static mixer elements (21) is disposed in the water bath above the baffle plates and at a distance therefrom, said set being enclosed by a jacket (22).

2. Apparatus according to claim 1, characterised in that the jacket (22) enclosing the set (20) of static mixer elements (21) extends into the region of the nozzles at its bottom end.

## Revendications

1. Dispositif destiné à éliminer les aérosols qui sont contenus dans l'air s'échappant de l'atmosphère de confinement d'un réacteur nucléaire en cas de surpression dans cette atmosphère de confinement, l'air étant envoyé, par une conduite (3) raccordée à l'atmosphère de confinement, vers une pluralité de buses (9) placées dans un bain d'eau (2), caractérisé en ce que le bain d'eau (2) est formé par un bassin se trouvant dans le réacteur nucléaire, en ce que les buses (9) sont formées par des tubes sensiblement verticaux, reliés à la conduite, en ce qu'il est prévu dans le bain d'eau, au-dessus de chacune des buses, à une certaine distance de leur sortie, une plaque de rebondissement (10) perforée qui forme avec la buse une unité modulaire (8) et en ce qu'il est prévu dans le bain d'eau, au-dessus de ces plaques de rebondissement et à une certaine distance de celles-ci, un empilement (20) d'éléments mélangeurs (21) statiques, entourés par une gaine (22).

2. Dispositif selon la revendication 1, caractérisé en ce que la gaine (22) entourant l'empilement (20) d'éléments mélangeurs (21) statiques s'étend, à son extrémité inférieure, jusque dans la zone des buses.
